# EUROPEAN PATENT SPECIFICATION

(11) **EP 4 368 482 B1**
(45) Date of publication and mention of the grant of the patent: **18.03.2026**
(21) Application number: 23199010.2
(22) Date of filing: 22.09.2023
(51) Int. Cl.: B62J 1/00

(54) **ADDLE FOR BICYCLES WITH A SIMPLIFIED CONSTRUCTION**
SATTEL FÜR FAHRRÄDER MIT VEREINFACHTER KONSTRUKTION
SELLE POUR BICYCLETTES À CONSTRUCTION SIMPLIFIÉE

(30) Priority: 11.11.2022 IT 202200023310
(43) Date of publication of application: 15.05.2024
(73) Proprietor: SELLE ITALIA S.r.l., 31011 Asolo (TV) (IT)
(72) Inventor: BIGOLIN, Riccardo, 31011 Asolo, TREVISO (IT); BUZZAVO, Andrea, 31011 Asolo, TREVISO (IT)
(74) Representative: Mitola, Marco

(56) References cited:
- EP-A2- 2 085 302
- WO-A2-2011/093993
- CN-A- 105 480 330
- FR-A1- 2 938 819
- US-A- 5 356 205

## Description

### FIELD OF APPLICATION

The present invention is in relation to a saddle for bicycles with a simplified construction.

### PRIOR ART

Known within the bicycle sector are saddles that are required to be inexpensive to make and assemble and that are required, at the same time, to ensure the necessary riding comfort.

Customarily, prior art saddles are made in at least three pieces that include a support frame which is typically tubular and configured to be in turn attached to a bicycle frame, a body, overlapping said frame, and padding, typically made of foam material, which in turn overlaps and is glued to the body and supported thereby.

Such solutions have some drawbacks and disadvantages in terms of implementation/assembly.

For example, the step of molding the padding and applying it to the body is critical: such application must in fact be on the one hand precise and on the other hand must not give rise, over time, to slipping of the padding which is normally glued to the body. Such possible slippages could compromise the comfort of the saddle insofar as they affect the shock absorption capabilities and also the freedom of compression/flexing of the padding itself.

The use of gluing involves problems in relation to the application of the glue and associated therewith, such as, considering that the saddle undergoes continuous deformation cycles and is subject to weathering, the disposal and sealing thereof over time.

Furthermore, gluing signifies time for the adhesive to spread and waiting time for it to dry/seal between those pieces that are to be mutually bonded. Solutions according to prior art are disclosed by CN 105480330 A or FR 2938819 A1.

### DISCLOSURE OF THE INVENTION

The need to solve the drawbacks and limitations mentioned with reference to the prior art is therefore felt.

This need is satisfied by a bicycle saddle according to claim 1.

### DESCRIPTION OF THE DRAWINGS

Further features and advantages of the present invention will become more apparent from the following detailed description of preferred, non-limiting embodiments thereof, wherein:

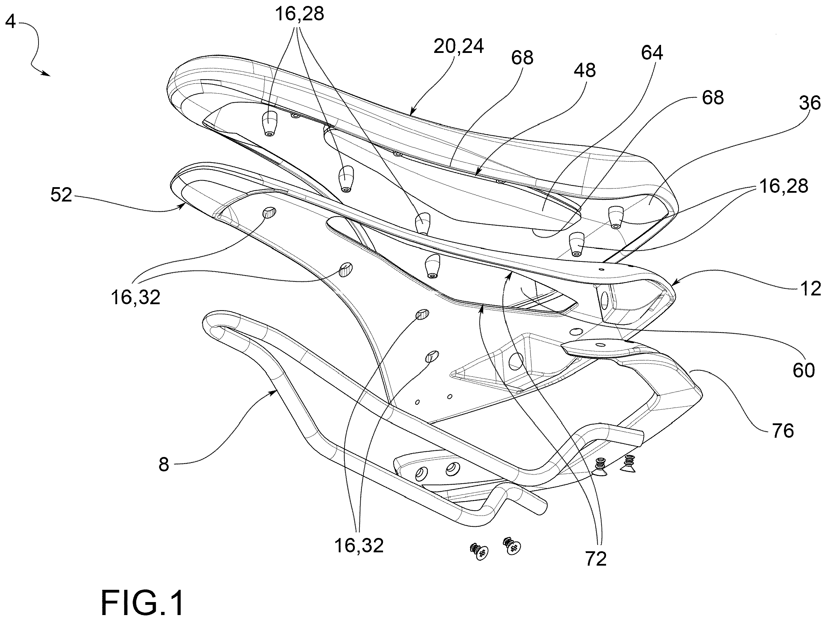

Figure 1 shows a perspective view, in an exploded configuration, of a bicycle saddle according to one embodiment of the present invention;

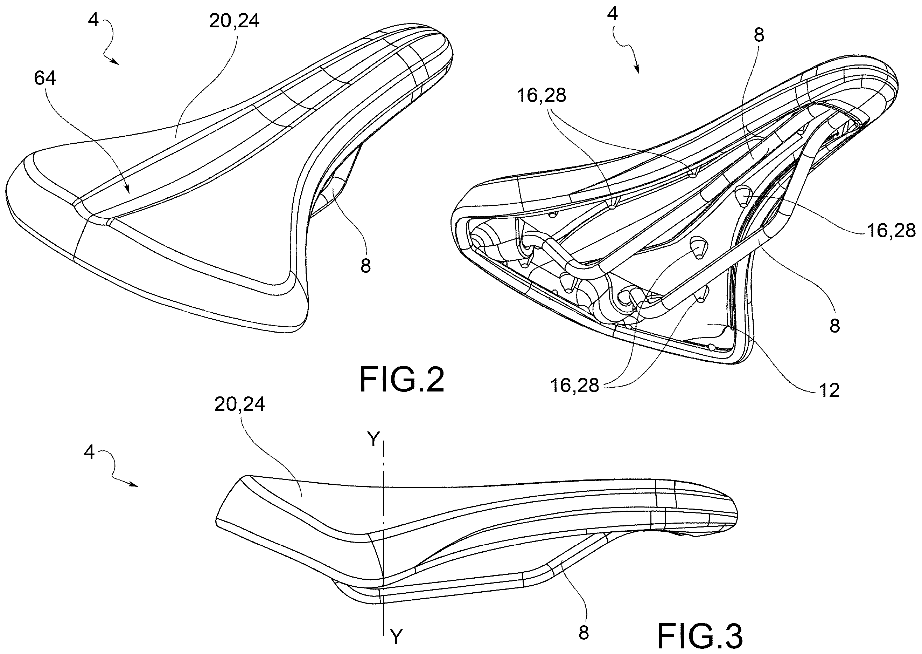

Figure 2 shows a perspective view from above and from below of the bicycle saddle of Figure 1, in an assembled configuration;
Figure 3 shows a lateral view of the bicycle saddle of Figure 1, in an assembled configuration;

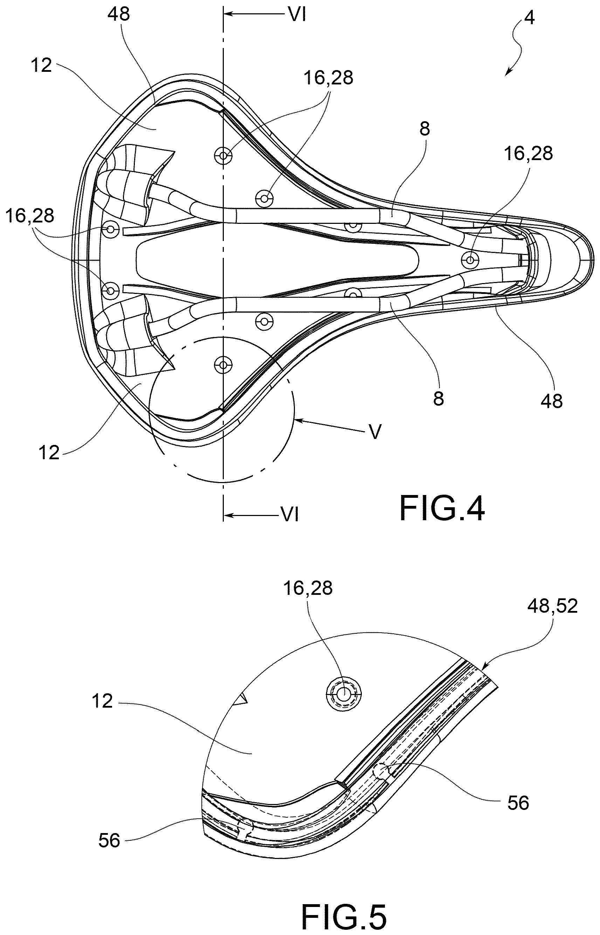

Figure 4 shows a plan view from below of the bicycle saddle of Figure 1, in an assembled configuration;
Figure 5 shows, enlarged, the detail V indicated in Figure 4;

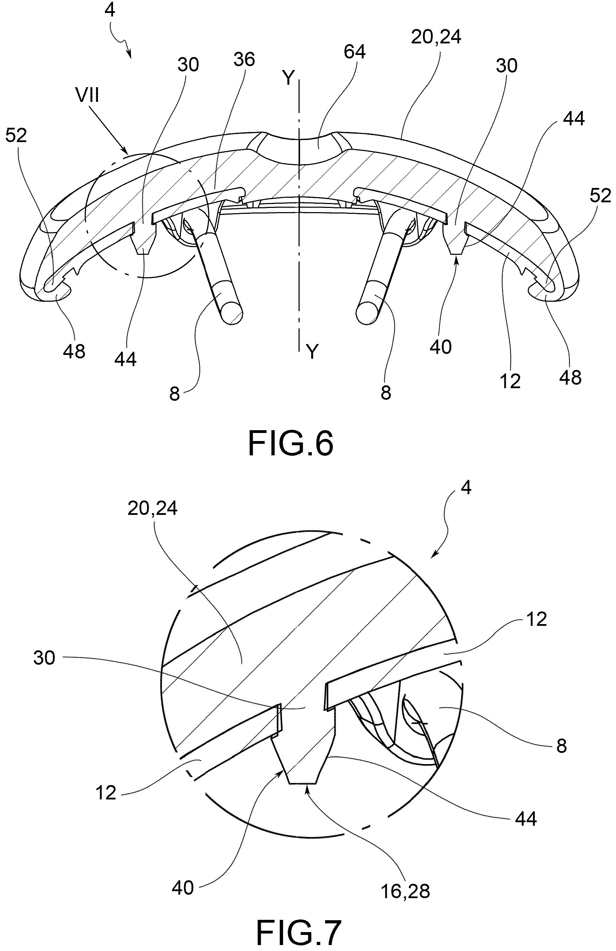

Figure 6 shows a cross-sectional view of the bicycle saddle in Figure 1, along the cross-sectional plane VI-VI shown in Figure 4;
Figure 7 shows, enlarged, the detail VII indicated in Figure 6;
Figure 8 shows a plan view of the base of the bicycle saddle according to a further embodiment of the present invention;
Figure 9 shows a sectional view of the saddle of Figure 8, along the section plane IX-IX of Figure 8;
Figure 10 shows, enlarged, the detail X indicated in Figure 9;
Figure 11 shows, enlarged, the detail XI indicated in Figure 8;
Figure 12 shows, enlarged, the detail XII indicated in Figure 9;
Figures 13-15 show views of details of shape coupling means according to further embodiments of the present invention.

Elements or parts of elements common to the embodiments described hereinafter will be indicated with the same numerical references.

### DETAILED DESCRIPTION

With reference to the aforesaid figures, an overall view of a bicycle saddle is indicated collectively with the numeral 4.

The saddle 4 comprises a frame 8 having a peripheral structure, configured to be fixed, in a known way, to a corresponding upright of a bicycle frame (not show). The frame 8 of the saddle 4 is typically a hollow tubular element and is manufactured, in a known way, from a metal or polymeric material.

The saddle 4 comprises, furthermore, a body 12 that overlaps said frame 8, along a vertical direction Y-Y, substantially perpendicular to said body 12, and anchored thereto by shape coupling means 16.

The saddle 4 comprises, furthermore, padding 20 comprising a cushion 24 overlapping said body 12 along said vertical direction Y-Y, made of an elastic polymeric material. Preferably said padding is made of EVA (ethylene vinyl acetate).

According to the present invention said shape coupling means 16 comprise a plurality of pegs 28 and relative fixing holes 32, wherein said pegs 28 are in a single piece with the cushion 24 of the padding 20 and facing from the part of the body 12. Furthermore, said pegs 28 are embedded with said fixing holes 32, obtained on the body 12.

Preferably, the fixing holes 32 are through the body 12.

According to one possible embodiment, said pegs 28 have a base 30, in a single piece with an inner wall 36 of the padding 20, facing the body 12, and a head 40, cantilevered with respect to the base 30.

According to the present invention said base 30 makes an undercut with the fixing holes 32 of the body 12, along the vertical direction Y-Y.

According to one possible embodiment, the head 40 has a front flare 44 configured to facilitate the insertion of the head 40 through the fixing hole 32.

According to the invention, an outer peripheral edge 48 of the padding 20 makes an undercut with an outer peripheral wall 52 of the body 12, along the vertical direction Y-Y.

According to one possible embodiment, at least one male-female coupling and/or an engagement 56 is included between the outer peripheral edge 48 of the padding 20 and the outer peripheral wall 52 of the body 12.

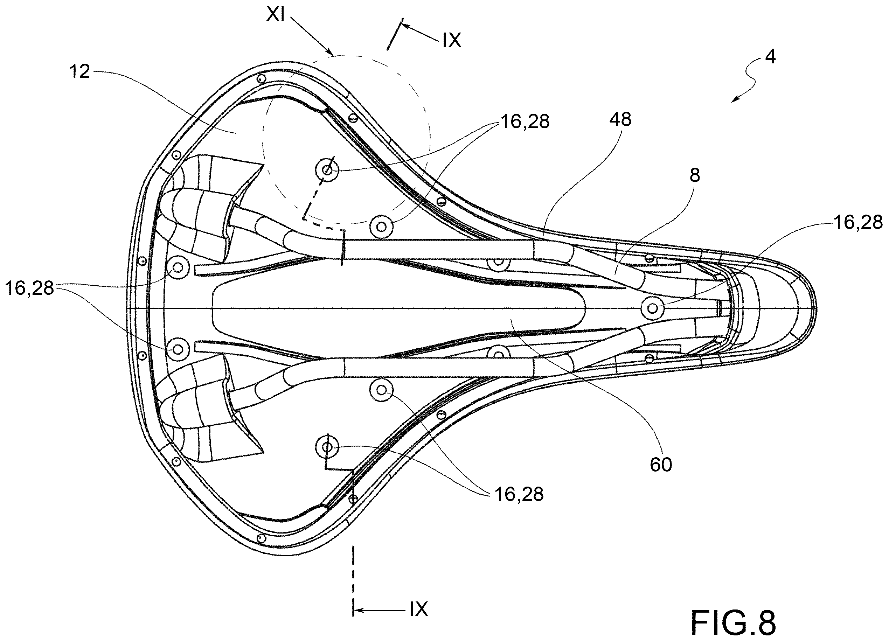

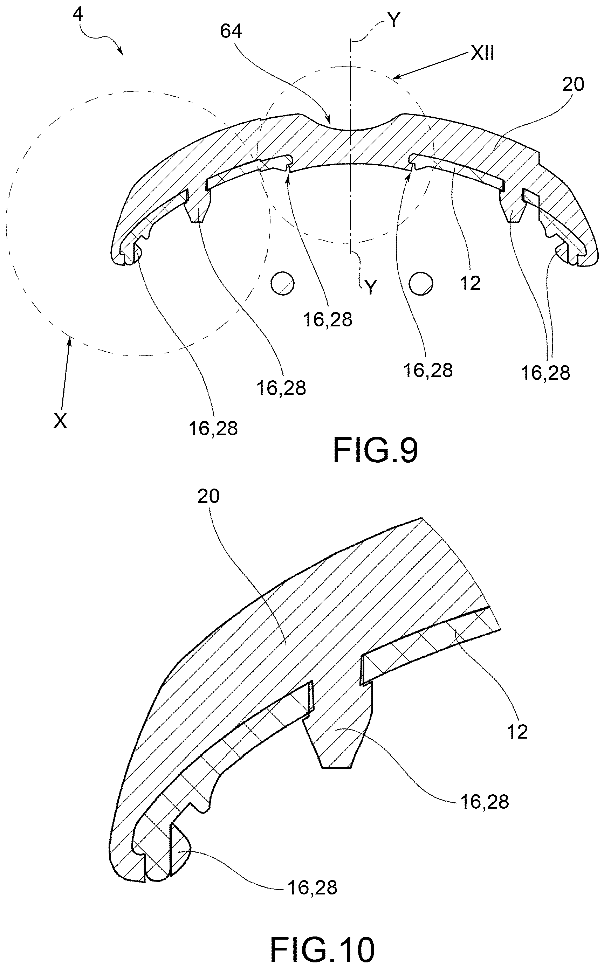

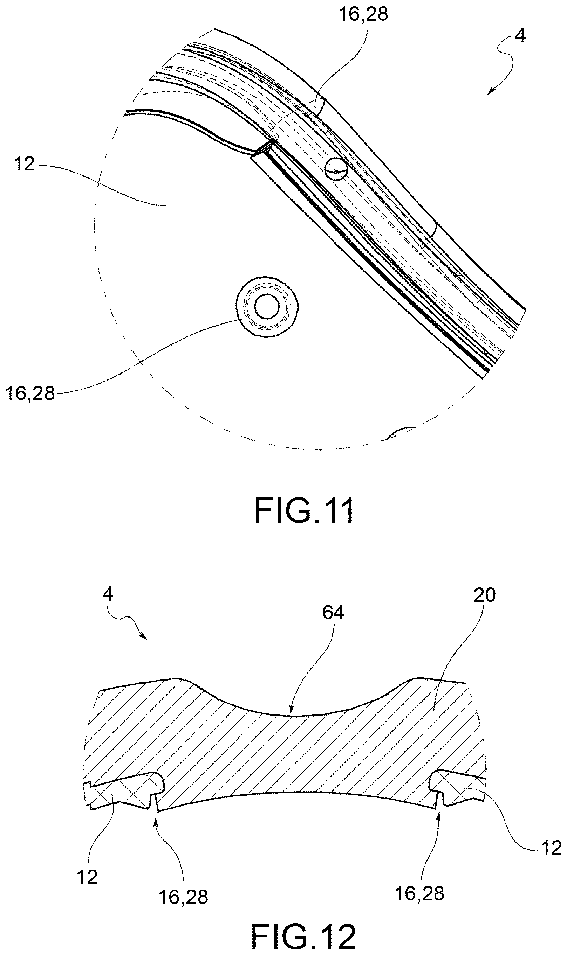

According to one possible embodiment (Figures 8-12), said shape coupling means 16 comprise pegs 28 arranged between the outer peripheral edge 48 of the padding 20 and the outer peripheral wall 52 of the body 12.

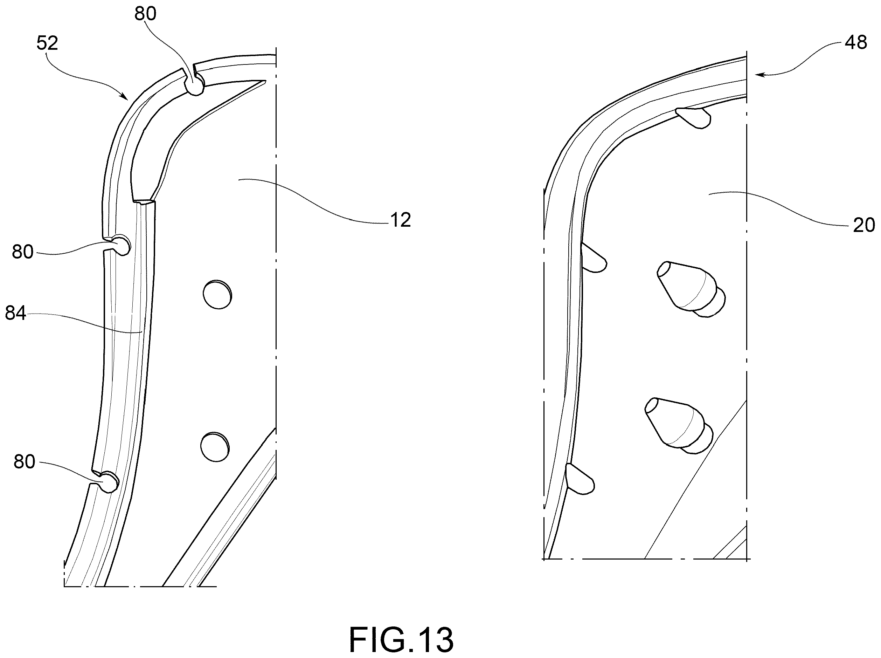

It is also possible to include the use of slits 80 and ribs 84 at the outer peripheral wall 52 of the body 12, which engage with corresponding pegs 28 on the padding 20 (Figure 13). In particular, the slits 80 facilitate the insertion of the pegs 28 and the ribs 84 make a further undercut coupling with the padding 20.

According to one possible embodiment, at least one connection by welding is included between the outer peripheral edge 48 of the padding 20 and the outer peripheral wall 52 of the body 12.

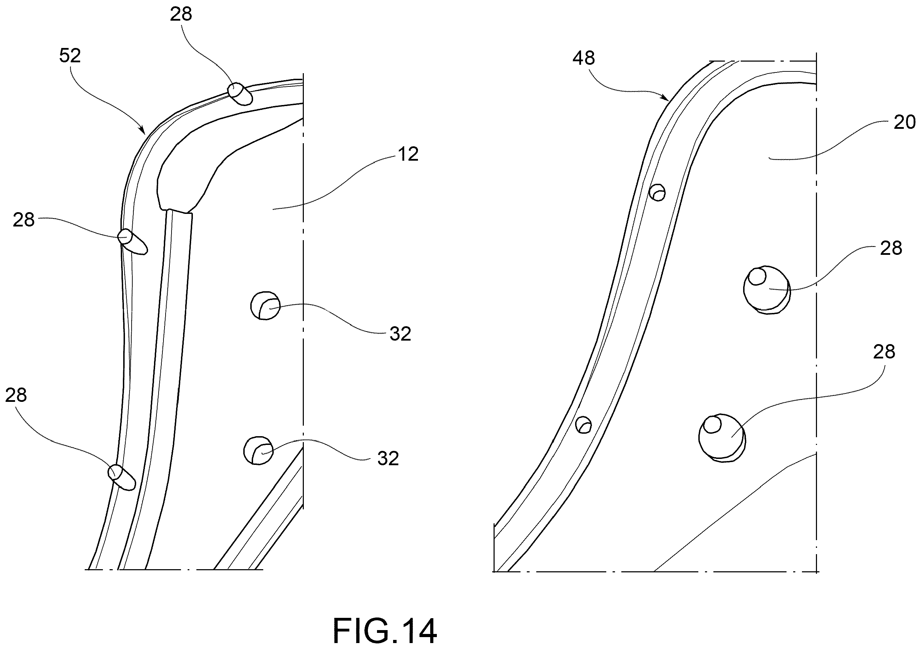

According to one possible embodiment (Figures 14-15), the pegs 28 are also associated with the body 12, at the outer peripheral wall 52 of the body 12, and are engaged in fixing holes 32 obtained on the outer peripheral edge 48 of the padding 20.

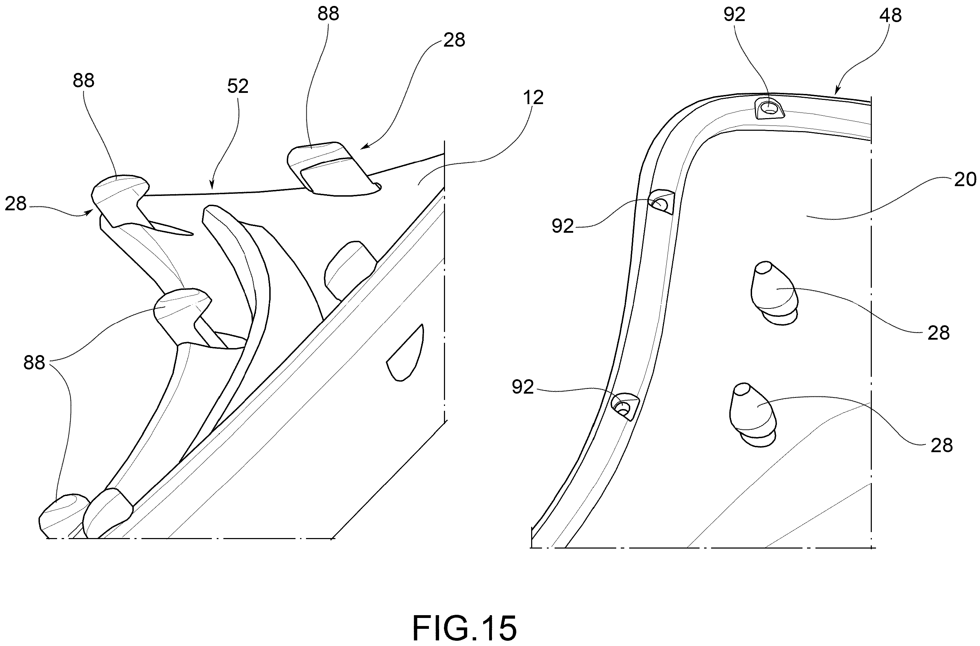

According to one possible embodiment (Figure 15), the pegs 28 on the body have a hook head 88 which engages in counter-shaped seats 92, configured to engage with said hook head 88.

According to one possible embodiment, the body 12 comprises a central hole 60 and the padding 20 includes a corresponding lowered central seat 64 counter-shaped to the central hole 60, wherein at the respective perimeters of the central hole 60 and the lowered central seat 64, the padding 20 includes an inner peripheral edge 68 which makes an undercut with an inner peripheral wall 72 of the body 12, along the vertical direction Y-Y.

According to one possible embodiment, at least one male-female coupling and/or at least one connection by welding are included at said respective perimeters of the central hole 60 and the lowered central seat 64.

According to one possible embodiment (Figures 8-12), said shape coupling means 16 comprise pegs 28 arranged at said respective perimeters of the central hole 60 and the lowered central seat 64.

Preferably, said lowered central seat 64 is a hole through the padding 20.

A handhold 76 may also be associated with the body 12.

The method for manufacturing and assembling a bicycle saddle will now be described.

In particular, the method proceeds with the step of arranging a frame 8 having a perimeter structure, configured to be fixed to a corresponding upright of a bicycle frame, arranging a body 12 to overlap said frame 8, along the vertical direction Y-Y, substantially perpendicular to said body 12, said body 12 being provided with fixing holes 32.

Additionally, the step is performed of molding a padding 20 in an elastic polymeric material, said padding 20 comprising, in a single piece, a cushion 24 and a plurality of pegs 28.

The molding of the padding 20 presents some peculiarities.

In particular, after the step of extracting the padding 20 from the mold, a geometric increase in the volume of the padding 20 of at least 30% and a subsequent shrinkage of at least 20% are expected.

In particular, the first step of increasing the volume is due to the fact that the polymeric material, once it has been extracted from the mold, tends to expand.

Subsequently, due to cooling, a reduction in volume occurs.

The manufacturing method therefore comprises the step of engaging, according to a shape coupling, the pegs 28 in said fixing holes 32 during said cooling.

Such coupling within the fixing holes 32 is facilitated by the presence of the front flare 44.

The diameter of the fixing holes 32 is less than the thickness of the head 40: in this way, undercuts are obtained with the fixing holes 32, along the vertical direction, in such a way as to make the padding 20 and the body 12 integral.

Finally the frame 8 is associated with the assembly comprising the body 12 and the padding 20.

As may be appreciated from that which has been described, the present invention overcomes the drawbacks of the prior art.

In particular, the present invention makes it possible to obtain a saddle that is economical to manufacture insofar as all of the steps of gluing the padding to the body, as occur in the solutions of the prior art, are eliminated.

Therefore, the timescales and costs of the saddle molding and assembly operations are reduced.

Moreover, the risks that occur with use in saddles of the prior art of the upholstery slipping in relation to the padding are avoided.

The saddle, thus manufactured, is also eco-friendly insofar as it does make use of glues.

Furthermore, the saddle, thus manufactured and assembled, is safe and reliable over time insofar as the shape couplings between the padding and the body ensure a complete and long-lasting assembly between the various parts.

In this way normal operating of the padding is also achieved, thereby ensuring consistent riding comfort also after prolonged use.

A person skilled in the art, for the purpose of satisfying contingent and specific needs, may make numerous modifications and variations to the solutions described above.

The scope of protection of the invention is defined by the following claims.

## Claims

1. Saddle (4) for bicycles comprising:
- a frame (8) having a peripheral structure, configured to be fixed to a corresponding upright of a bicycle frame,
- a body (12) overlapping said frame (8), along a vertical direction (Y-Y), substantially perpendicular to said body (12), and anchored thereto by shape coupling means (16),
- a padding (20) comprising a cushion (24) overlapping said body (12) along said vertical direction (Y-Y), made of an elastic polymeric material,
- wherein said shape coupling means (16) comprise a plurality of pegs (28) and relative fixing holes (32), wherein said pegs (28) are in a single piece with the cushion (24) of the padding (20) and facing from the part of the body (12), and wherein said pegs (28) are embedded in said fixing holes (32), obtained on the body (12),
**characterized in that** an outer peripheral edge (48) of the padding (20) makes an undercut with an outer peripheral wall (52) of the body (12), along the vertical direction (Y-Y).

2. Saddle (4) for bicycles according to claim 1, wherein said fixing holes (32) are through the body (12).

3. Saddle (4) for bicycles according to any one of claims 1 to 2, wherein said pegs (28) have a base (30), in a single piece with an inner wall (36) of the padding (20), facing the body (12), and a head (40), cantilevered with respect to the base (30).

4. Saddle (4) for bicycles according to claim 3, wherein said base (30) is configured so as to make an undercut with the fixing holes (32) of the body (12), along the vertical direction (Y-Y).

5. Saddle (4) for bicycles according to claim 3 or 4, wherein the head (40) has a front flare (44) configured to facilitate the insertion of the head (40) through the fixing hole (32).

6. Saddle (4) for bicycles according to any one of claims 1 to 5, wherein at least one male-female coupling is included between the outer peripheral edge (48) of the padding (20) and the outer peripheral wall (52) of the body (12).

7. Saddle (4) for bicycles according to any one of claims 1 to 6, wherein said shape coupling means (16) comprise pegs (28) arranged between the outer peripheral edge (48) of the padding (20) and the outer peripheral wall (52) of the body (12).

8. Saddle (4) for bicycles according to claim 7, wherein said shape coupling means (16) comprise slits (80) and ribs (84) at the outer peripheral wall (52) of the body (12) which engage with corresponding pegs (28) on the padding (20).

9. Saddle (4) for bicycles according to claim 8, wherein said slits (80) are configured to facilitate the insertion of the pegs (28) and the ribs (84) are configured to make an undercut coupling with the padding (20).

10. Saddle (4) for bicycles according to claim 7, 8 or 9, wherein the pegs (28) are also associated with the body (12), at the outer peripheral wall (52) of the body (12) and are engaged in fixing holes (32) obtained on the outer peripheral edge (48) of the padding (20) and wherein the pegs (28) on the body (12) have a hook head (88) which engages in counter-shaped seats (92), configured to engage with said hook head (88).

11. Saddle (4) for bicycles according to any one of claims 1 to 10, wherein the body (12) comprises a central hole (60) and the padding (20) includes a corresponding lowered central seat (64) counter-shaped to the central hole (60), wherein at the respective perimeters of the central hole (60) and the lowered central seat (64), the padding (20) includes an inner peripheral edge (68) which makes an undercut with an inner peripheral wall (72) of the body (12), along the vertical direction (Y-Y).

12. Saddle (4) for bicycles according to claim 11, wherein at least one male-female coupling and/or an engagement (56) and/or at least one connection by welding are included at said respective perimeters of the central hole (60) and the lowered central seat (64).

13. Saddle (4) for bicycles according to claim 11 or 12, wherein said shape coupling means (16) comprise pegs (28) arranged at said respective perimeters of the central hole (60) and the lowered central seat (64).

## Patentansprüche

1. Sattel (4) für Fahrräder umfassend:
- einen Rahmen (8) aufweisend eine Umfangsstruktur, die dazu konfiguriert ist, an einem entsprechenden Ständer eines Fahrradrahmens befestigt zu werden,
- einen Körper (12), der sich dem Rahmen (8) überlappt, entlang einer vertikalen Richtung (Y-Y), die im Wesentlichen senkrecht zu dem Körper (12) ist, und daran mittels Formschlussmittel (16) verankert wird,
- eine Polsterung (20), umfassend ein Polster (24), das sich dem Körper (12) entlang einer vertikalen Richtung (Y-Y) überlappt, bestehend aus einem elastischen Polymermaterial,
- wobei die Formschlussmittel (16) eine Mehrzahl von Haken (28) und zugehörige Befestigungsbohrungen (32) umfassen, wobei die Haken (28) einstückig mit dem Polster (24) der Polsterung (20) ausgebildet sind und von dem Teil des Körpers (12) abgewandt sind, und wobei die Haken (28) in den Befestigungsbohrungen (32) eingebettet sind, die auf den Körper (12) erhalten werden, **dadurch gekennzeichnet, dass** ein äußerer Umfangsrand (48) der Polsterung (20) eine Hinterschneidung mit einer äußeren Umfangswand (52) des Körpers (12) entlang der vertikalen Richtung (Y-Y) bildet.

2. Sattel (4) für Fahrräder nach Anspruch 1, wobei die Befestigungsbohrungen (32) durch den Körper (12) hindurchgehen.

3. Sattel (4) für Fahrräder nach einem der Ansprüche 1 bis 2, wobei die Haken (28) eine Basis (30) aufweisen, die einstückig mit einer Innenwand (36) der Polsterung (20), die dem Körper (12) zugewandt ist, ausgebildet ist und einen Kopf (40) aufweisen, der in Bezug auf die Basis (30) kragend ausgebildet ist.

4. Sattel (4) für Fahrräder nach Anspruch 3, wobei die Basis (30) dazu konfiguriert ist, um eine Hinterschneidung mit den Befestigungsbohrungen (32) des Körpers (12) entlang der vertikalen Richtung (Y-Y) zu bilden.

5. Sattel (4) für Fahrräder nach Anspruch 3 oder 4, wobei der Kopf (40) eine vordere Verbreiterung (44) aufweist, die dazu konfiguriert ist, das Einführen des Kopfes (40) durch die Befestigungsbohrung (32) zu erleichtern.

6. Sattel (4) für Fahrräder nach einem der Ansprüche 1 bis 5, wobei mindestens eine Steckverbindung zwischen dem äußeren Umfangsrand (48) der Polsterung (20) und der äußeren Umfangswand (52) des Körpers (12) enthalten ist.

7. Sattel (4) für Fahrräder nach einem der Ansprüche 1 bis 6, wobei die Formschlussmittel (16) Haken (28) umfassen, die zwischen dem äußeren Umfangsrand (48) der Polsterung (20) und der äußeren Umfangswand (52) des Körpers (12) angeordnet sind.

8. Sattel (4) für Fahrräder nach Anspruch 7, wobei die Formschlussmittel (16) Schlitze (80) und Rippen (84) an der äußeren Umfangswand (52) des Körpers (12) umfassen, die mit entsprechenden Haken (28) an der Polsterung (20) in Eingriff stehen.

9. Sattel (4) für Fahrräder nach Anspruch 8, wobei die Schlitze (80) dazu konfiguriert sind, das Einführen der Haken (28) zu erleichtern, und die Rippen (84) dazu konfiguriert sind, eine Hinterschneidung-Kopplung mit der Polsterung (20) zu bilden.

10. Sattel (4) für Fahrräder nach einem der Ansprüche 7, 8 oder 9, wobei die Haken (28) auch dem Körper (12), an der äußeren Umfangswand (52) des Körpers (12), zugeordnet sind und in Befestigungsbohrungen (32) in Eingriff stehen, die an dem äußeren Umfangsrand (48) der Polsterung (20) erhalten sind, und wobei die Haken (28) an dem Körper (12) einen Hakenkopf (88) aufweisen, der in entgegensetzt geformten Sitze (92) in Eingriff steht, die dazu konfiguriert sind mit dem Hakenkopf (88) in Eingriff zu kommen.

11. Sattel (4) für Fahrräder nach einem der Ansprüche 1 bis 10, wobei der Körper (12) ein Zentralbohrung (60) umfasst und die Polsterung (20) einen entsprechenden abgesenkten Zentralsitz (64) umfasst, der zu der Zentralbohrung (60) entgegensetzt geformt wird, wobei an den jeweiligen Umfängen der Zentralbohrung (60) und des abgesenkten Zentralsitzes (64) die Polsterung (20) eine Hinterschneidung mit einem inneren Umfangswand (72) des Körpers (12) entlang der vertikalen Richtung (Y-Y) bildet.

12. Sattel (4) für Fahrräder nach Anspruch 11, wobei mindestens eine Steckverbindung und/oder ein Eingriff (56) und/oder mindestens eine Verbindung durch Schweißen an den jeweiligen Umfängen der Zentralbohrung (60) und des abgesenkten Zentralsitzes (64) vorgesehen ist.

13. Sattel (4) für Fahrräder nach Anspruch 11 oder 12, wobei die Formschlussmittel (16) Haken (28) umfassen, die an den jeweiligen Umfängen der Zentralbohrung (60) und des abgesenkten Zentralsitzes (64) angeordnet sind.

## Revendications

1. Selle (4) pour bicyclettes comprenant :
- un cadre (8) présentant une structure périphérique, configuré pour être fixé à un montant correspondant d'un cadre de bicyclette,
- un corps (12) chevauchant ledit cadre (8), selon une direction verticale (Y-Y), sensiblement perpendiculaire audit corps (12), et ancré à celui-ci au moyen d'un couplage de forme (16),
- un rembourrage (20) comprenant un coussin (24) chevauchant ledit corps (12) selon ladite direction verticale (Y-Y), constitué d'un matériau polymère élastique,
dans lequel ledit couplage de forme (16) comprend une pluralité de tenons (28) et de trous de fixation correspondants (32), lesdits tenons (28) étant en une seule pièce avec le coussin (24) du rembourrage (20) et orientés depuis la partie du corps (12), et dans lequel lesdits tenons (28) sont logés dans lesdits trous de fixation (32), réalisés sur le corps (12), **caractérisé en ce qu'**un bord périphérique externe (48) du rembourrage (20) forme un contre-dépouille avec une paroi périphérique externe (52) du corps (12), selon la direction verticale (Y-Y).

2. Selle (4) pour bicyclettes selon la revendication 1, dans laquelle lesdits trous de fixation (32) traversent le corps (12).

3. Selle (4) pour bicyclettes selon l'une quelconque des revendications 1 à 2, dans laquelle lesdits tenons (28) présentent une base (30), en une seule pièce avec une paroi interne (36) du rembourrage (20), orientée vers le corps (12), et une tête (40), en porte-à-faux par rapport à la base (30).

4. Selle (4) pour bicyclettes selon la revendication 3, dans laquelle ladite base (30) est configurée de manière à former une contre-dépouille avec les trous de fixation (32) du corps (12), selon la direction verticale (Y-Y).

5. Selle (4) pour bicyclettes selon la revendication 3 ou 4, dans laquelle la tête (40) présente un évasement frontal (44) configuré pour faciliter l'insertion de la tête (40) à travers le trou de fixation (32).

6. Selle (4) pour bicyclettes selon l'une quelconque des revendications 1 à 5, dans laquelle au moins un couplage mâle-femelle est prévu entre le bord périphérique externe (48) du rembourrage (20) et la paroi périphérique externe (52) du corps (12).

7. Selle (4) pour bicyclettes selon l'une quelconque des revendications 1 à 6, dans laquelle ledit couplage de forme (16) comprend des tenons (28) disposés entre le bord périphérique externe (48) du rembourrage (20) et la paroi périphérique externe (52) du corps (12).

8. Selle (4) pour bicyclettes selon la revendication 7, dans laquelle ledit couplage de forme (16) comprend des fentes (80) et des nervures (84) au niveau de la paroi périphérique externe (52) du corps (12) qui s'engagent avec des tenons (28) correspondants sur le rembourrage (20).

9. Selle (4) pour bicyclettes selon la revendication 8, dans laquelle lesdites fentes (80) sont configurées pour faciliter l'insertion des tenons (28) et les nervures (84) sont configurées pour former un couplage à contre-dépouille avec le rembourrage (20).

10. Selle (4) pour bicyclettes selon l'une quelconque des revendications 7, 8 ou 9, dans laquelle les tenons (28) sont également associés au corps (12), au niveau de la paroi périphérique externe (52) du corps (12) et sont engagés dans des trous de fixation (32) réalisés sur le bord périphérique externe (48) du rembourrage (20) et dans laquelle les tenons (28) sur le corps (12) présentent une tête à crochet (88) qui s'engage dans des sièges contre-formés (92), configurés pour s'engager avec ladite tête à crochet (88).

11. Selle (4) pour bicyclettes selon l'une quelconque des revendications 1 à 10, dans laquelle le corps (12) comprend un trou central (60) et le rembourrage (20) comprend un siège central abaissé correspondant (64) contre-formé au trou central (60), dans laquelle aux périmètres respectifs du trou central (60) et du siège central abaissé (64), le rembourrage (20) comprend un bord périphérique interne (68) qui forme une contre-dépouille avec une paroi périphérique interne (72) du corps (12), selon la direction verticale (Y-Y).

12. Selle (4) pour bicyclettes selon la revendication 11, dans laquelle au moins un couplage mâle-femelle et/ou un accouplement (56) et/ou au moins une liaison par soudure sont prévus auxdits périmètres respectifs du trou central (60) et du siège central abaissé (64).

13. Selle (4) pour bicyclettes selon la revendication 11 ou 12, dans laquelle ledit couplage de forme (16) comprend des tenons (28) disposés au niveau desdits périmètres respectifs du trou central (60) et du siège central abaissé (64).
